# EUROPEAN PATENT SPECIFICATION

(11) **EP 1 342 634 B1**
(45) Date of publication and mention of the grant of the patent: **18.01.2006**
(21) Application number: 02251599.3
(22) Date of filing: 07.03.2002
(51) Int. Cl.: B60T 17/04

(54) **Hydraulic hoses**
Hydraulische Schläuche
Tuyaux flexibles hydrauliques

(43) Date of publication of application: 10.09.2003
(73) Proprietor: Ford Global Technologies, LLC, Dearborn, Michigan 48126-2490 (US); Ford Otomotiv Sanayi Anonim Sirketi, 81150 Uskudar Istanbul (TR)
(72) Inventor: Akyurek, Zeynep Müge Muderris Salih Rustu, Istanbul 80600 (TR); Woodhouse, John Leonard, Basildon, Essex SS16 5EW (GB)
(74) Representative: Grunfeld, David Peter

(56) References cited:
- DE-A- 3 246 779
- US-A- 3 610 289
- US-A- 4 491 336
- US-A- 5 875 872

## Description

### Field

This invention relates to high pressure resistant hydraulic hoses, particularly by not exclusively, for use in vehicle hydraulic braking systems.

### Background of the Invention

In typical automobile braking systems the front brake assemblies are typically connected to the brake system high pressure resistant steel tubing via a flexible high pressure resistant hose. The steel tubing typically terminates at a coupling supported on the vehicle body and the flexible hydraulic hose may be routed from the coupling to the brake assembly, sometimes via a mounting on the shock absorber. To meet clearance requirements between the hose and moving parts in the gear box and drive shafts areas it is required to substantially fix the locus of the hose. This frequently requires the hose to pass through two dynamic loops, one between the vehicle body and shock absorber and the other between the shock absorber and the brake assembly. Where a desired angular orientation of the hose relative to the brake assembly is desired the hose may be connected to banjo connectors on the hydraulic brake cylinder, e.g. a brake caliper, or routed via an intermediate bracket on the shock absorber. Locating grommets may be utilised with the shock absorber bracket for aligning the hose. However these grommets do not prevent rotational creep of the hose in service and this may give rise to concerns relating to potential clearances.

US Patent No. 4491336 describes a vehicle braking system in which a twist is introduced into a flexible conduit mounted between a vehicle body coupling and a brake assembly to guide a slack portion of the conduit away from the surrounding structure during extremes of movement of the wheels and other moving parts of the vehicle suspension. The twist is introduced into the conduit by loosening the conduit clamping bolts, rotating an end portion of the conduit, and retightening the clamping bolts to capture the twist.

The present invention provides a method of defining the route of a hydraulic hose through space and a hose suitable for use with the method.

### Statement of Invention

According to a first aspect of the present invention there is provided a method of routing a flexible hydraulic hose between two relatively displaceable components, the routing of the hydraulic hose between said components being substantially defined by applying a predetermined angular rotation to one end portion of the hose to induce internal stresses within the hose, interconnecting said hose between the components whist stressed, and maintaining said connected hose in a stressed condition, characterised in that the hose is held in the stressed condition by interengaging anti-rotation means operable between at least one of said components and a hose end fitting.

Preferably, the rotation of the hose is typically about 15 degrees of twist. Anti-rotation means may be provided at each end of the hose.

In use, said hose can be arranged to execute only a single dynamic loop between the components.

The invention also comprises a method of interconnecting a vehicle hydraulic brake actuator with a vehicle braking system using flexible brake hose to connect the actuator with a coupling mounted on the vehicle body, wherein said method includes a method in accordance with the first aspect of the present invention.

The method is particularly suitable for connecting front brake calipers to brake system couplings mounted on the vehicle front body panels.

According to yet another aspect of the present invention there is provided a hydraulic hose having end fittings fixed at each end thereof for connection to components in a hydraulic system, at least one end fitting including tube having a rotatable nut thereon for connection to a respective component, said one fitting further including an anti-rotation device for holding the end fitting against rotation relative to a component to which it is connected, characterised in that the anti-rotation device comprises a projection fixed to said one end fitting and engagable with a co-operating abutment, e.g. a notch, fixed relative to said component. The projection may extend axially relative to the end fitting, that is in a direction substantially parallel to the axis of rotation of the end fitting.

Said one end fitting may have at least a portion of its outer peripheral surface adapted for engagement with a tool for applying a rotational load to that end portion of the hose. The surface may be roughened by knurling, provided with external flats for engaging a spanner, or may have a continuous annular array of radially projecting teeth thereon.

The hose may typically comprise a composite hose having an elastomeric inner hollow core surrounded by a braided reinforcement, and covered with an outer elastomeric sheath as is well known for high pressure resistant hoses. The end fittings are typically swaged onto the ends of the hose.

### Description of the Drawings

The invention will be described by way of example and with reference to the accompanying drawings in which:
Fig. 1 is a isometric view of a vehicle front brake installation including a hose according to the present invention;
Fig. 2 is an enlarged view as encircled at "A" in Fig. 1 showing details of one end fitting of the hose connecting to a brake caliper,
Fig. 3 is a longitudinal section through said one end fitting shown in Fig.2; and
Fig. 4 is an enlarged view as encircled at "B" in Fig. 1 showing details of the other end fitting of the hose mounted to a vehicle body panel.

### Detailed Description of the Invention

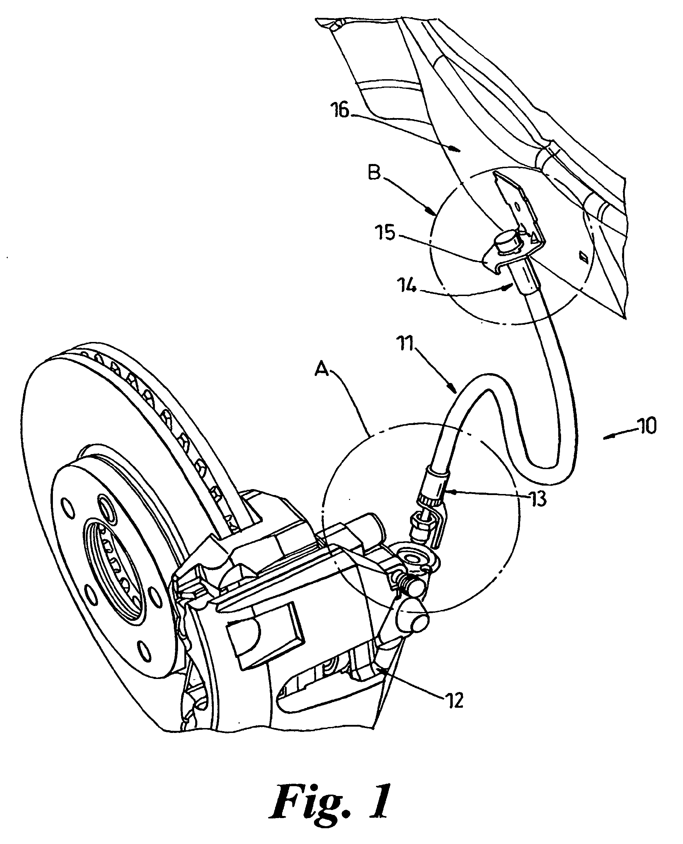

With reference to Figure 1 there is shown an installation of a motor vehicle front flexible brake hose 10 interconnecting a front disc brake caliper 12 to a hydraulic brake system. The flexible resilient hose 10 includes a pair of end fittings 13 & 14, which are swaged onto the hose body 11, and the hose, when installed as shown, forms a single dynamic loop with one end fitting 13 (conveniently referred to as the outboard end fitting) connected to the caliper 12 and the other end fitting 14 (conveniently referred to as the inboard end fitting) mounted on a bracket 15 secured to a vehicle body panel 16. The hose 10 extend between a sprung portion of the vehicle (i.e. body panel 16) and an un-sprung portion of the vehicle (i.e. caliper 12) and there is a constant relative movement between the two portions when the vehicle is in use due to suspension and steering deflections of a front wheel (not shown) associated with the brake caliper 12.

In order to keep the hose 10 clear of moving surfaces, a controlled pre-twist is applied to the hose body 11. This pre-twist around the longitudinal axis of the hose body 11 is typically about 15 degrees of arc and causes the hose body 11 to take a substantially pre-determined route or path through space between the two end fittings 13, 14.

Thus, it is possible to keep the hose body 11 clear of other moving parts by applying the required amount of twist to define a particular route.

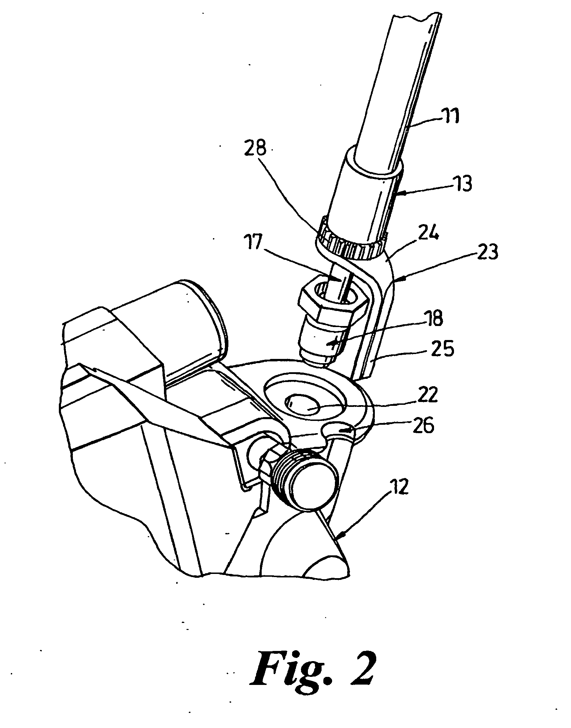

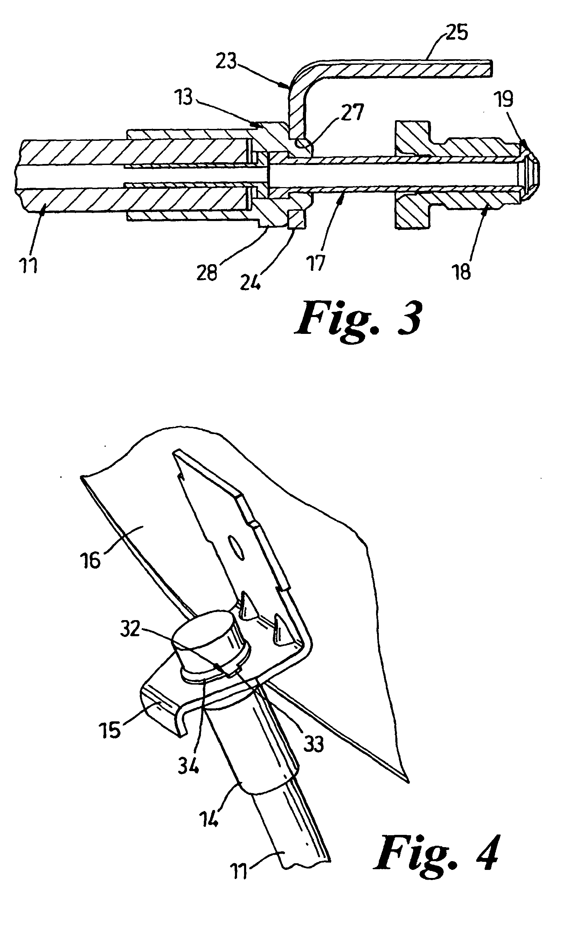

The connection between the outboard end fitting 13 and the caliper 12 is shown in greater detail in Figs. 2 & 3. The outboard end fitting 13 includes a short length of tubing 17 (e.g. standard steel brake system tubing) which passes freely through a free running sleeve nut 18. The tubing 17 has a flared end 19 that sits against a frustoconical seat in a hydraulic inlet port 22 in the caliper 12. The nut 18 screws into the inlet port 22 to form a fluid-tight seal between the flared end 19 and the seat.

In order that the hose 10 can be held in its "twisted" or stressed condition, the outboard end fitting 13 is provided with an anti-rotation device 23 which comprises a collar 24 having a projection in form of a tongue 25 which extends substantially axially of the end fitting 13 and parallel with its axis. The tongue 25 cooperates with a notch 26 in the caliper body 12 to define an exact position of the outboard hose end fitting 13 relative to the caliper body. The anti-rotation device 23 is rotational fast with the end fitting 13. As shown, the collar 24 is a separate component fixed to the end fitting 13 by, for example, being a press fit onto end spigot 27 of the fitting. Alternatively, the tongue 25 may be formed integrally with the end fitting 13.

The twisting of the hose 11 may be facilitated by the provision of a formation 28 on the external surface of the outboard end fitting 13. The formation 28 may be shaped for engagement with a tool to enable a twisting load to be applied to the hose body 11. With the inboard end fitting 14 held fast in its mounting bracket 15 at a particular rotational alignment relative thereto, a predetermined twist can be applied to the hose body 11 to engage the tongue 25 with its co-operating notch 26.

It is advantageous if the inboard end fitting 14 also has an anti-rotation device which also serves as an alignment device for the hose 10. With reference to Fig. 4, such a anti-rotation device comprises a lug 32 engaging in a notch 33 in the locating hole 34 of the bracket 15. If the anti-rotation devices 23, 32 and their respective end fittings 13 & 14 differ, the hose can only be installed one way, always with the same degree of twist.

When fitting the hose 10, the inboard end fitting 14 can be aligned relative to the bracket 15 and secured. The outboard end fitting 13 is located at the caliper 12 and twisted so that the tongue 25 engages the notch 26, and the sleeve nut 18 then screwed into the caliper and tightened.

## Claims

1. A method of routing a flexible hydraulic hose (10) between two relatively displaceable components (12, 16), the routing of the hydraulic hose (10) between said components (12, 16) being substantially defined by applying a predetermined angular rotation to one end portion (13) of the hose (10) to induce internal stresses within the hose (10), interconnecting said hose (10) between the components (12, 16) whilst stressed, and maintaining said connected hose (10) in a stressed condition, **characterised in that** the hose (10) is held in the stressed condition by interengaging anti-rotation means (25, 26) operable between at least one of said components (12) and a hose end fitting (13).

2. A method as claimed in Claim 1, wherein the hose (10) is twisted by about 15 degrees of arc and held in that condition.

3. A method as claimed in Claim 1 or 2, wherein anti-rotation means (25, 26) are provided at each end (13, 14) of the hose (10).

4. A method as claimed in any one of Claims 1 to 3, wherein said hose (10) executes a single dynamic loop between the components (12, 16).

5. A method of interconnecting a vehicle hydraulic brake actuator (12) with a vehicle braking system using flexible brake hose (10) to connect the actuator (12) with a coupling (15) mounted on the vehicle body (16), wherein said method includes a method as claimed in any one of Claims 1 to 4.

6. A flexible hydraulic hose (10) having end fittings (13, 14) fixed at each end thereof for connection to components in a hydraulic system, at least one end fitting (13) including a tube (17) having a rotatable nut (18) thereon for connection to a respective component (22), said one fitting (13) further including an anti-rotation device for holding the end fitting (13) against rotation relative to a component (12) to which its is connected, **characterised in that** the anti-rotation device comprises a projection (25) fixed to said one end fitting (13) engagable with a co-operating abutment (26) fixed relative to said component (12).

7. A hose as claimed in Claim 6, wherein the projection (25) extends axially of the hose (10).

8. A hose as claimed Claim 6 or 7, wherein said one end fitting (13) has at least a portion of its outer peripheral surface (28) adapted for engagement with a tool for applying a rotational load to that end portion of the hose (10).

9. A hose as claimed in any one of Claims 6 to 8 and having an alignment device on the end fitting (14) at said other end of the hose (10) to align the hose (10) relative to a mounting bracket (15).

10. A hose as claimed in Claim 9, wherein the alignment device also serves as an anti-rotation device.

11. Use of a hose as claimed in any one of Claims 6 to 10 in a vehicle to interconnect a hydraulic brake actuator (12) with a coupling (15) mounted on the vehicle body (16).

12. A motor vehicle hydraulic brake system including a hose as claimed in any one of Claims 6 to 10.

## Patentansprüche

1. Verfahren zur Führung eines flexiblen Hydraulikschlauchs (10) zwischen zwei relativ verschiebbaren Bauteilen (12, 16), wobei das Führen des Hydraulikschlauchs (10) zwischen den Bauteilen (12, 16) im Wesentlichen **dadurch** definiert wird, dass ein Endabschnitt (13) des Schlauchs (10) mit einer vorbestimmten Winkeldrehung beaufschlagt wird, um innere Spannung im Schlauch (10) zu erzeugen, der Schlauch (10) im gespannten Zustand zwischen den Bauteilen (12, 16) verbunden wird und der verbundene Schlauch (10) in einem gespannten Zustand gehalten wird, **dadurch gekennzeichnet, dass** der Schlauch (10) in dem gespannten Zustand gehalten wird, indem zwischen mindestens einem der Bauteile (12) und einem Schlauchendverbinder (13) wirksame Drehsicherungsmittel (25, 26) in Eingriff genommen werden.

2. Verfahren nach Anspruch 1, wobei der Schlauch (10) um ungefähr 15 Bogengrad verdreht wird und in diesem Zustand gehalten wird.

3. Verfahren nach Anspruch 1 oder 2, wobei an jedem Ende (13, 14) des Schlauchs (10) Drehsicherungsmittel (25, 26) vorgesehen werden.

4. Verfahren nach einem der Ansprüche 1 bis 3, wobei der Schlauch (10) eine einzige dynamische Schleife zwischen den Bauteilen (12, 16) beschreibt.

5. Verfahren zum Verbinden eines Fahrzeughydraulikbremsenstellers (12) mit einer Fahrzeugbremsanlage unter Verwendung eines flexiblen Bremsschlauchs (10) zur Verbindung des Stellers (12) mit einer an der Fahrzeugkarosserie (16) montierten Kupplung (15), wobei das Verfahren ein Verfahren nach einem der Ansprüche 1 bis 4 einschließt.

6. Flexibler Hydraulikschlauch (10) mit an jedem seiner Enden befestigten Endverbindern (13, 14) zur Verbindung mit Bauteilen in einem Hydrauliksystem vorgesehen, wobei mindestens ein Endverbinder (13) ein Rohr (17) mit einer daran angeordneten drehbaren Mutter (18) zur Verbindung mit einem jeweiligen Bauteil (22) aufweist, wobei der Endverbinder (13) ferner eine Drehsicherungsvorrichtung aufweist, um den Endverbinder (13) gegen eine Drehung bezüglich eines Bauteils (12), mit dem er verbunden ist, zu halten, **dadurch gekennzeichnet, dass** die Drehsicherungsvorrichtung einen Vorsprung (25) aufweist, der an dem einen Endverbinder (13) befestigt ist und mit einem zusammenwirkenden, bezüglich des Bauteils (12) befestigten Widerlager (26) in Eingriff gebracht werden kann.

7. Schlauch nach Anspruch 6, wobei der Vorsprung (25) axial zum Schlauch (10) verläuft.

8. Schlauch nach Anspruch 6 oder 7, wobei mindestens ein Abschnitt der äußeren Umfangsfläche (28) des einen Endverbinders (13) zur Ineingriffnahme mit einem Werkzeug zur Beaufschlagung dieses Endabschnitts des Schlauchs (10) mit einer Rotationsbeanspruchung ausgelegt ist.

9. Schlauch nach einem der Ansprüche 6 bis 8 mit einer Ausrichtungsvorrichtung am Endverbinder (14) am anderen Ende des Schlauchs (10) zur Ausrichtung des Schlauchs (10) bezüglich einer Montagehalterung (15).

10. Schlauch nach Anspruch 9, wobei die Ausrichtungsvorrichtung auch als eine Drehsicherungsvorrichtung dient.

11. Verwendung eines Schlauchs nach einem der Ansprüche 6 bis 10 in einem Fahrzeug zur Verbindung eines Hydraulikbremsenstellers (12) mit einer an der Fahrzeugkarosserie (16) montierten Kupplung (15).

12. Kfz-Hydraulikbremsanlage mit einem Schlauch nach einem der Ansprüche 6 bis 10.

## Revendications

1. Procédé pour l'acheminement d'un tuyau flexible hydraulique (10) entre deux composants pouvant se déplacer l'un par rapport à l'autre (12, 16), l'acheminement du tuyau flexible hydraulique (10) entre lesdits composants (12, 16) étant essentiellement défini par l'application d'une rotation angulaire prédéterminée à une partie d'extrémité (13) du tuyau flexible (10) pour induire des contraintes internes dans le tuyau flexible (10), l'interconnexion dudit tuyau flexible (10) entre les composants (12, 16) alors qu'il est soumis à cet effet de contrainte, et le maintien dudit tuyau flexible connecté (10) dans une condition de contrainte, **caractérisé en ce que** le tuyau flexible (10) est maintenu dans la condition de contrainte par l'engagement réciproque de moyens d'anti-rotation (25, 26) capables d'agir entre au moins un desdits composants (12) et un raccord (13) d'une extrémité du tuyau flexible.

2. Procédé selon la revendication 1, dans lequel le tuyau flexible (10) est tortillé d'environ 15 degrés d'arc et maintenu dans cette condition.

3. Procédé selon la revendication 1 ou 2, dans lequel des moyens d'anti-rotation (25, 26) sont prévus à chaque extrémité (13, 14) du tuyau flexible (10).

4. Procédé selon l'une quelconque des revendications 1 à 3, dans lequel ledit tuyau flexible (10) forme une seule boucle dynamique entre les composants (12, 16).

5. Procédé pour l'interconnexion d'un actionneur de frein hydraulique (12) de véhicule avec un circuit de freinage de véhicule en utilisant un tuyau flexible de frein (10) pour connecter l'actionneur (12) à un accouplement (15) monté sur la carrosserie du véhicule (16), dans lequel ledit procédé comprend un procédé selon l'une quelconque des revendications 1 à 4.

6. Tuyau flexible hydraulique (10) à chaque extrémité duquel sont fixés des raccords d'extrémité (13, 14) pour la connexion aux composants d'un circuit hydraulique, au moins un raccord d'extrémité (13) comprenant une tubulure (17) comportant un écrou rotatif (18) pour la connexion à un composant respectif (22), ledit un raccord (13) comportant en outre un dispositif anti-rotation pour bloquer le raccord d'extrémité (13) contre toute rotation relative à un composant (12) auquel il est connecté, **caractérisé en ce que** le dispositif anti-rotation comprend une saillie (25) fixée audit un raccord d'extrémité (13) et pouvant s'engager avec un point d'aboutement coopérant (26) fixe par rapport audit composant (12).

7. Tuyau flexible selon la revendication 6, dans lequel la saillie (25) s'étend dans le sens axial du tuyau flexible (10).

8. Tuyau flexible selon la revendication 6 ou 7, dans lequel ledit un raccord d'extrémité (13) a au moins une partie de sa surface périphérique extérieure (28) adaptée pour l'engagement avec un outil dans le but d'appliquer une charge rotative à cette partie d'extrémité du tuyau flexible (10).

9. Tuyau flexible selon l'une quelconque des revendications 6 à 8 et comportant un dispositif d'alignement sur le raccord d'extrémité (14) à ladite autre extrémité du tuyau flexible (10) pour aligner le tuyau flexible (10) par rapport à un support de fixation (15).

10. Tuyau flexible selon la revendication 9, dans lequel le dispositif d'alignement sert également de dispositif anti-rotation.

11. Utilisation d'un tuyau flexible selon l'une quelconque des revendications 6 à 10 dans un véhicule pour interconnecter un actionneur de frein hydraulique (12) avec un accouplement (15) monté sur la carrosserie du véhicule (16).

12. Circuit hydraulique de freinage de véhicule automobile comprenant un tuyau flexible selon l'une quelconque des revendications 6 à 10.
